# FASCICULE DE BREVET EUROPEEN

(11) **EP 1 272 370 B1**
(45) Date de publication et mention de la délivrance du brevet: **24.09.2003**
(21) Numéro de dépôt: 01921460.0
(22) Date de dépôt: 03.04.2001
(51) Int. Cl.: B60L 5/20

(54) **ARCHET DE PANTOGRAPHE AVEC ETRIER EN MATERIAU COMPOSITE**
SCHLEIFSTÜCK FÜR STROMABNEHMER MIT BÜGEL AUS FASERVERBUNDSTOFF
PANTOGRAPH BOW WITH SLIDING CONTACT MADE OF COMPOSITE MATERIAL

(30) Priorité: 11.04.2000 FR 0004628
(43) Date de publication de la demande: 08.01.2003
(73) Titulaire: Carbone Lorraine Applications Electriques, 80080 Amiens (FR)
(72) Inventeur: HOSOTTE, Arnaud, F-57000 Metz (FR); BRUNEAU, Jean-Louis, F-95150 Taverny (FR); DESMICHT, Denis, F-54530 Pagny-sur-Moselle (FR); HUG, Christian, F-57420 Cheminot (FR)
(74) Mandataire: Marsolais, Richard
(86) Numéro de dépôt international: FR0100996
(87) Numéro de publication internationale: WO01076906

(56) Documents cités:
- EP-A- 0 212 666
- EP-A- 0 364 972
- US-A- 5 657 842

## Description

### Domaine de l'invention

La présente invention concerne les pantographes utilisés pour le captage de courant électrique depuis un conducteur électrique fixe, appelé "caténaire", vers un véhicule ferroviaire à l'arrêt ou en mouvement. L'invention concerne plus particulièrement l'archet des pantographes, qui comprend une bande de frottement destinée au contact électrique avec la caténaire, et l'étrier dudit archet destiné à porter ladite bande.

### Etat de la technique

Les pantographes utilisés sur les matériels ferroviaires comprennent typiquement un dispositif de soutien mobile et un archet. Le dispositif de soutien supporte l'archet et permet de le mettre en contact avec la caténaire, qui est en général un fil de cuivre, assurant ainsi le transfert de courant de la caténaire vers le véhicule en mouvement ou l'arrêt. L'archet comprend une bande de frottement, qui est généralement en matériau carboné, un étrier et des moyens de raccordement électrique. La bande de frottement est typiquement en graphite et peut être imprégnée de cuivre ou d'un alliage à base de cuivre.

L'étrier, qui est généralement en acier ou en aluminium, est un support rigide qui augmente la tenue mécanique de la bande de frottement (voir US 5 657 842). En effet, la bande seule ne possède pas des caractéristiques mécaniques suffisantes pour permettre la fixation de cornes aux extrémités et ne supporte pas bien les coups engendrés par le contact avec la caténaire. Ces contraintes mécaniques peuvent entraîner la formation de fissures dans la bande, qui peuvent conduire à la rupture de celle-ci. L'étrier est normalement muni de moyens pour le fixer mécaniquement au dispositif de soutien.

L'assemblage de la bande de frottement et de l'étrier est le plus souvent réalisé par brasage. Le brasage présente l'inconvénient de nécessiter une bonne rectitude de la bande de frottement, ce qui peut être obtenu par des opérations d'aplanissement incluant typiquement une opération d'usinage, qui constituent un surcoût de production. Le brasage est également en soi une opération longue et coûteuse car elle entraîne plusieurs opérations intermédiaires, telles qu'un décapage des pièces, une passivation, un sablage et un étamage.

La demanderesse a donc recherché des moyens qui permettent de simplifier la fabrication de l'étrier et de l'archet.

### Description de l'invention

L'étrier d'archet de pantographe selon l'invention est caractérisé en ce qu'il est constitué, en tout ou partie, d'au moins un composite organique comprenant des fibres et une matrice organique.

Dans sa recherche de solutions aux problèmes posés, la demande a eu l'idée d'utiliser pour l'étrier un matériau qui soit mou au moment de la mise en forme et de l'assemblage et qui puisse être durci ensuite par un traitement approprié. De cette manière, le matériau peut épouser plus aisément les irrégularités de surface de la bande d'usure, évitant ainsi le recours à des opérations supplémentaires d'aplanissement de la bande de frottement. Une fois durci, le matériau augmente considérablement les caractéristiques mécaniques de l'ensemble et évite le recours à un matériau métallique.

De préférence, au moins la partie de l'étrier en contact avec la bande de frottement est constituée dudit composite. Afin de limiter le nombre de pièces et de simplifier l'assemblage, l'étrier peut être entièrement constitué dudit composite.

L'invention a également pour objet un archet de pantographe comprenant une bande de frottement (ou bande d'usure) et un étrier selon l'invention.

L'invention a également pour objet un pantographe comprenant au moins un archet selon l'invention.

L'invention a également pour objet un procédé de fabrication de l'archet de l'invention.

### Figures

La figure 1 montre un archet typique de l'art antérieur en contact avec une caténaire : a) vu de côté ; b) vu du dessous. La figure 2 représente, en section transversale par rapport au sens long de l'archet (plan A-A de la figure 1), un archet typique de l'art antérieur.

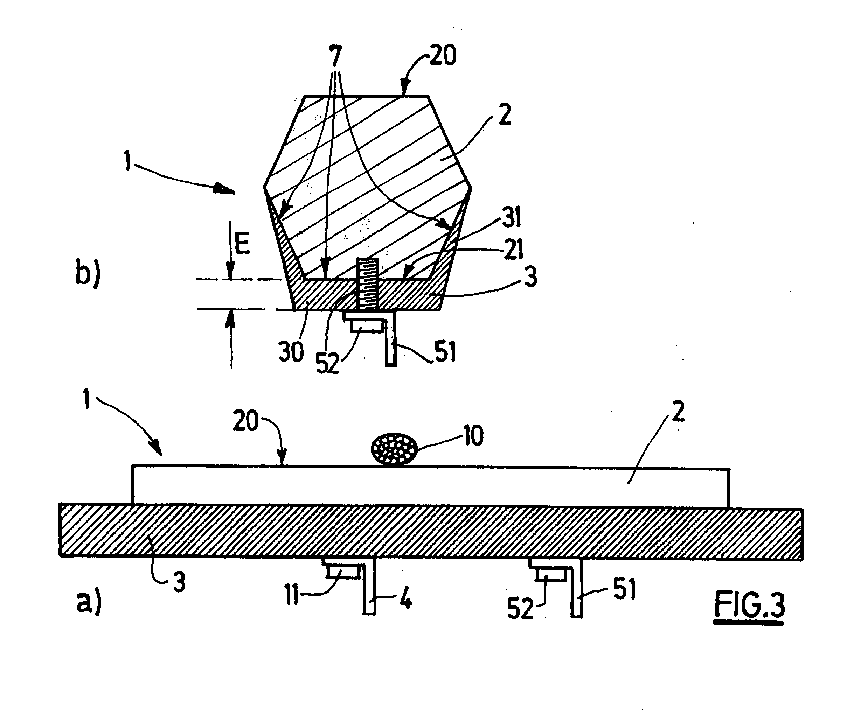

La figure 3 représente, de manière schématique, un archet selon l'invention : a) vu de côté ; b) vu en coupe transversale par rapport au sens long de l'archet.

La figure 4 montre un archet selon l'invention : a) vu de côté ; b) vu du dessus. La figure 5 montre l'archet de la figure 4 vu selon la coupe transversale B-B. La figure 6 montre une extrémité de l'archet de la figure 4 selon le plan de coupe longitudinale A-A. Le trait discontinu donne le profil d'une corne d'extrémité typique fixée sur l'extrémité de l'archet.

La figure 7 illustre des étapes d'un procédé de fabrication d'un archet selon l'invention. Les éléments sont vus en section transversale.

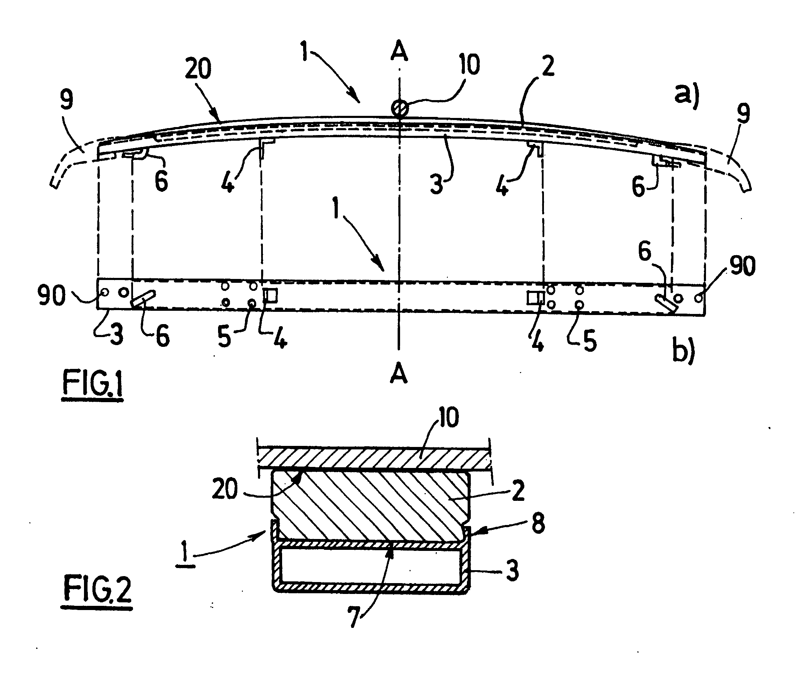

Un archet (1) de l'art antérieur, tel que celui représenté aux figures 1 et 2, comprend typiquement une bande de frottement (2), un étrier (3), des moyens de fixation (4), des moyens de raccordement électrique (5) et des moyens de détection d'avarie et d'usure (6). En utilisation, la bande de frottement est mise en contact avec la caténaire (10) afin de permettre la transmission d'énergie électrique entre ces deux éléments. L'étrier est typiquement obtenu à partir d'un profilé creux. L'étrier (3) améliore la tenue mécanique de la bande d'usure (2) lorsque celle-ci est à base de graphite, et permet en outre de fixer l'archet sur le pantographe à l'aide des moyens (4). La liaison entre la bande et l'étrier comprend typiquement une soudure au droit de la surface de contact (7) entre les deux pièces et un blocage mécanique à l'aide d'une déformation plastique d'une bordure (8). L'archet est généralement muni de cornes d'extrémité (9) fixées par des moyens de fixation mécaniques (90).

### Description détaillée de l'invention

L'étrier (3) d'archet de pantographe (1) selon l'invention est caractérisé en ce qu'il comprend, en tout ou partie, au moins un composite organique comprenant des fibres et une matrice organique.

Ledit composite est de préférence stable thermiquement au moins jusqu'à 300°C. La matrice organique est de préférence une résine polymère, et de préférence encore une résine polymère thermodurcissable. Les fibres peuvent être soit organiques (telles qu'une fibre aramide), soit minérales (telles qu'une fibre de verre, une fibre de carbone, une fibre de bore ou une fibre céramique). Par exemple, ledit composite peut être une résine phénolique chargée de fibres de verre. Les fibres peuvent être de composition différente afin de combiner avantageusement leurs caractéristiques.

Les fibres peuvent être courtes (c'est-à-dire de longueur comprise typiquement entre 2 et 20 mm) ou longues (c'est-à-dire de longueur typiquement supérieure à 20 mm). Dans le cas de fibres longues, ces dernières peuvent être constituées d'un roving d'une longueur sensiblement égale à celle de l'étrier. Un roving est un assemblage de fils de base disposés de manière sensiblement parallèle et groupés sans torsion. Les fibres longues présentent l'avantage d'éviter la séparation des morceaux en cas de rupture de la matrice.

De préférence, la matrice et les fibres sont non-conductrices de l'électricité, ce qui permet de réduire les phénomènes d'arc électrique entre la caténaire et l'étrier. Des arcs électriques peuvent se produire lorsque la caténaire n'est pas en contact avec la bande de frottement quoique à proximité de celle-ci. Ces arcs électriques peuvent détériorer l'archet au point d'impact.

L'épaisseur E de la base (30) de l'étrier (3) est typiquement comprise entre 1 et 10 mm, selon la taille de l'archet et la composition du composite. Les côtés (31) de l'étrier peuvent être plus minces que la base (30). L'étrier (3) peut ne pas comprendre de côtés (31).

L'étrier (3) selon l'invention est apte à recevoir une bande de frottement (ou bande d'usure) (2).

L'invention a également pour objet un archet de pantographe (1) comprenant une bande de frottement (2) et un étrier (3), et caractérisé en ce que l'étrier (3) est constitué, en tout ou partie, d'au moins un composite organique comprenant des fibres et une matrice organique.

La bande de frottement (2) peut être un graphite, éventuellement imprégné d'un métal, ou comprendre, en tout ou partie, un matériau composite C/C, éventuellement imprégné d'un métal. Le métal d'imprégnation peut être du cuivre ou un alliage contenant du cuivre (tel qu'un laiton ou un bronze) ou du plomb ou un alliage contenant du plomb.

Un composite carbone/carbone (C/C) est un matériau solide comprenant des fibres de carbone (ou "substrat fibreux") noyées dans une matrice de carbone. Les fibres de carbone sont, par exemple, des fibres de brai, des fibres ex-polyacrylonitrile ou des fibres ex-viscose. Ces fibres peuvent se présenter sous différentes formes, telles que sous forme de tissu 2D ou 3D, de nappe unidirectionnelle ou de fibres aléatoires.

La matrice de carbone peut être obtenue suivant différentes techniques, telles que par infiltration d'un liquide riche en carbone qui est ensuite pyrolysé pour laisser un squelette carboné autour des fibres, l'opération étant répétée autant de fois que nécessaire (typiquement 3 ou 4 fois), par infiltration d'un gaz riche en carbone dans des conditions thermodynamiques favorisant le craquage du gaz, laissant un dépôt de pyrocarbone sur les fibres, ou par une combinaison de ces deux techniques.

L'imprégnation de métal peut être obtenue par infiltration du métal à l'état liquide dans la porosité résiduelle du graphite ou du composite C/C (c'est-à-dire la porosité restant ouverte après les phases de construction de la matrice de carbone du composite) et par solidification du métal infiltré. L'infiltration est généralement effectuée en autoclave, à des pressions importantes (typiquement de 20 à 200 bars) afin d'assurer une bonne infiltration du métal liquide dans la porosité.

En général, l'archet comprendra également des moyens (4, 11) de fixation mécanique et/ou des moyens de raccordement électrique (51, 52). Lorsque le composite est un isolant électrique, les moyens de raccordement électrique permettent une transmission efficace de l'énergie électrique captée par la bande de frottement. Par exemple, le raccordement électrique peut être obtenu par au moins une vis (52) qui, d'une part, pénètre dans la bande de frottement et qui, d'autre part, est en contact électrique avec au moins une patte de raccordement (51), qui est généralement une patte métallique.

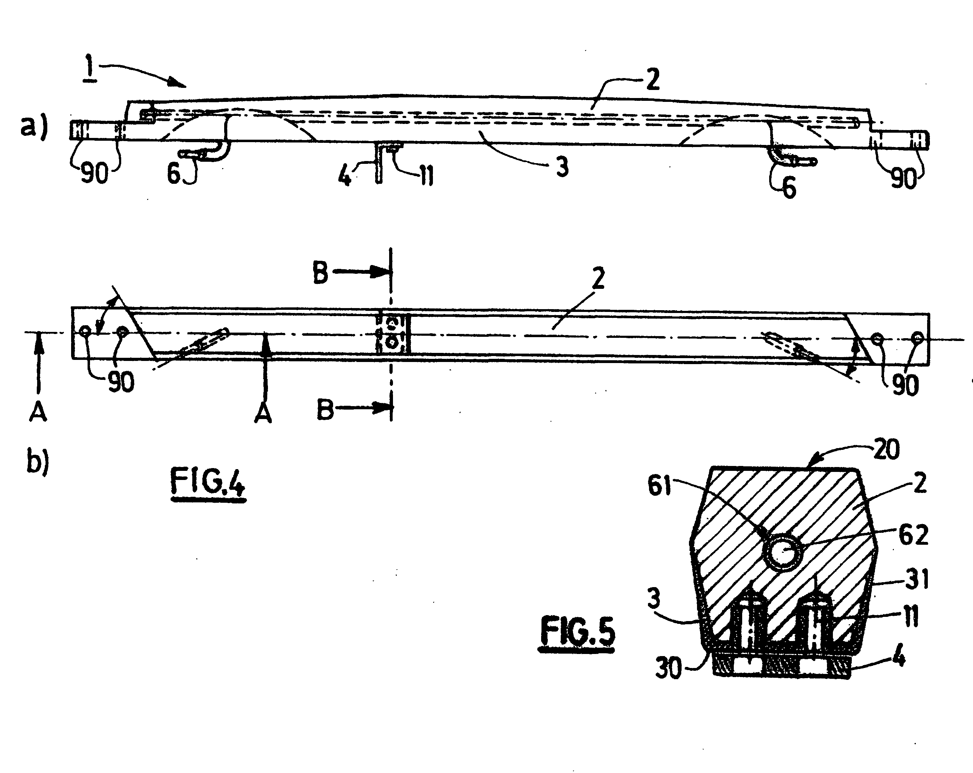

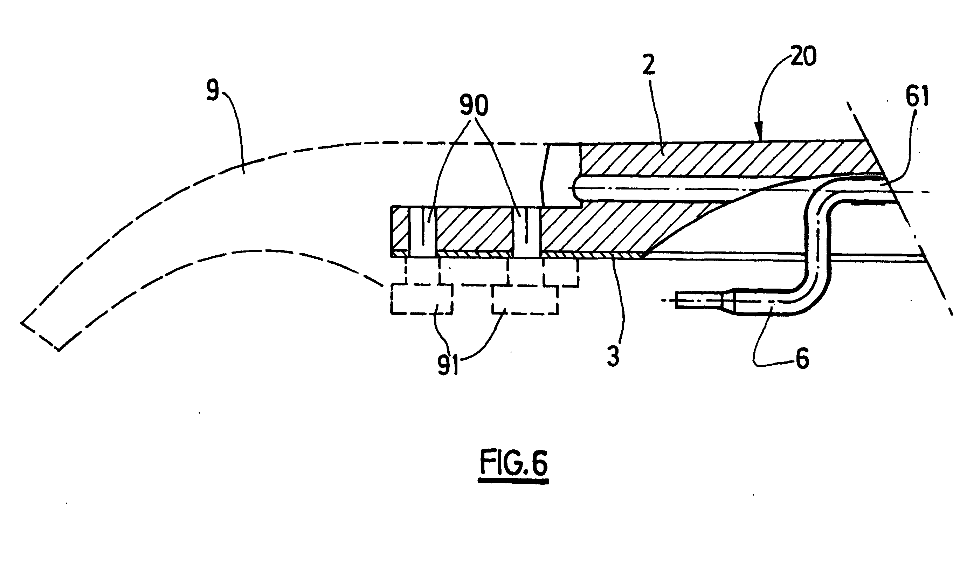

L'archet selon l'invention peut comprendre en outre des moyens (6, 61, 62) pour détecter les avaries et/ou l'usure de la bande de frottement, tel qu'illustré aux figures 4 à 6. Ces moyens comprennent généralement un conduit (62), qui est typiquement un tube (61) en métal, en graphite ou en composite C/C, dans lequel peut circuler un fluide de détection selon les techniques connues. Le tube (61) est typiquement situé soit dans un trou aménagé dans la bande de frottement (2) et sensiblement longitudinal et parallèle à la surface de frottement (20) de la bande (2), soit dans une rainure sensiblement longitudinale prévue dans la surface de la bande (2) qui est en contact avec l'étrier (3), laquelle rainure est généralement dans la partie centrale de la surface (21) opposée à la surface de frottement (20). Le conduit (62) peut ne comprendre de tube (61) et être formé par ledit trou ou ladite rainure à l'aide de moyens d'étanchéité et/ou de parois complémentaires.

L'archet (1) peut être muni de cornes d'extrémité (9) fixées par des moyens de fixation mécaniques (9, 91), tels que des ouvertures (9) et des vis (91).

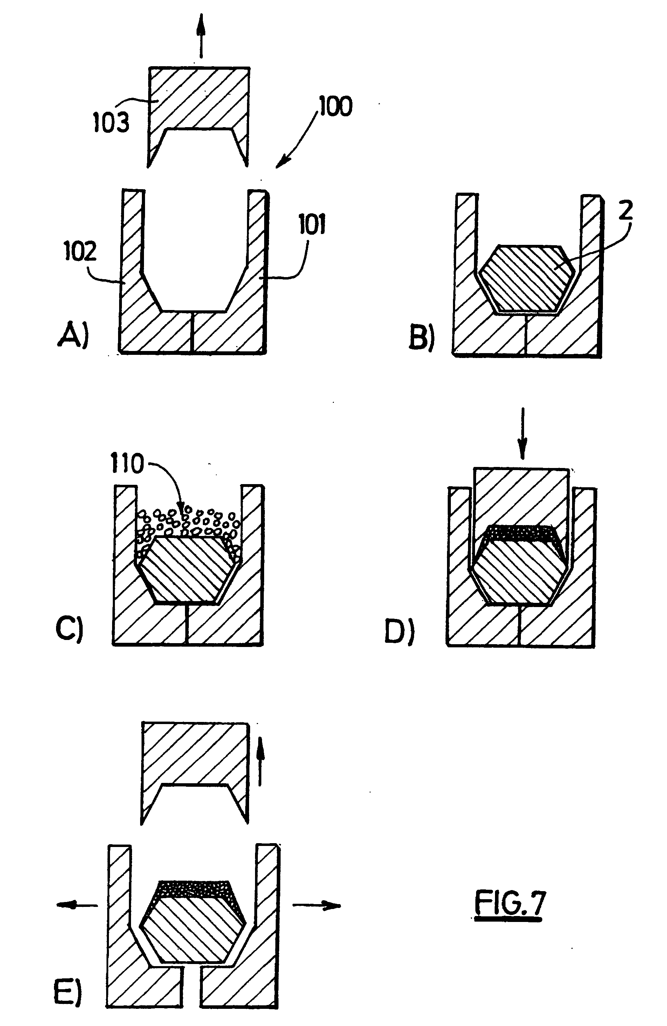

En référence à la figure 7, le procédé de fabrication selon l'invention utilise un moule (100) comprenant un corps (101, 102) et une contre-forme (103) (figure 7A). Selon l'invention, ledit procédé comprend de préférence :
- l'introduction d'une bande de frottement (2) dans le moule (100) (figure 7B) ;
- l'application d'un mélange de fibres et de résine (appelé "prepreg") (110) sur la bande de frottement (2) (figure 7C);
- le pressage du prepreg à l'aide d'une contre-forme (103), de manière à lui donner une répartition homogène et à assurer un contact intime entre la bande et la résine (figure 7D);
- une opération de durcissement du composite par polymérisation. Cette étape peut être réalisée par cuisson dans un four, selon un cycle propre à la résine utilisée. En pratique, il est avantageux d'effectuer l'étape de durcissement en laissant l'archet "cru" dans le moule, ce qui permet de maîtriser la forme finale du produit ;
- le démoulage de l'archet ainsi obtenu (figure 7E).

Afin de faciliter l'opération de démoulage, le moule (et notamment le corps de celui-ci) peut être constitué de pièces séparées et complémentaires (101, 102).

Le procédé peut également comprendre, avant l'introduction de la bande de frottement dans le moule, une opération de préparation ou de mise en place du moule dans laquelle on éloigne la contre-forme (103) du corps (101, 102) du moule (100). Cette opération peut également comprendre la formation du corps du moule (par exemple par assemblage de pièces complémentaires (101, 102)) et/ou l'application d'un produit visant à faciliter le démoulage.

Le procédé peut comprendre une opération de fixation de moyens de raccordement électrique (51, 52), des moyens de fixation mécanique (4, 11) et/ou des cornes d'extrémité (9).

Le procédé selon l'invention présente l'avantage de permettre une fabrication simple et rapide de l'étrier et de l'archet selon l'invention. Il permet également de créer un contact étroit entre l'étrier et la bande de frottement qui est apte à conférer une adhérence et une étanchéité élevées à la jonction entre ces pièces.

L'invention a également pour objet un pantographe comprenant au moins une bande de frottement (2) selon l'invention.

### Essais

La demanderesse a observé que la résistance mécanique des archets selon l'invention était très élevée. Typiquement, avec une résine phénolique chargée de fibres de verre longues, et avec une épaisseur de la base (30) de l'étrier de 2 mm environ, les archets selon l'invention ont pu supporter, sans se casser, une charge de 400 kg en leur centre (selon le test en trois points qui consiste à faire reposer l'étrier sur deux points de support et à appliquer un poids donné sur le dessus, en son centre). En outre, la jonction entre la bande (en graphite dans les essais) et la résine était très forte et assurait une cohésion très élevée. Des cycles de chocs de 40 kg toutes les 2 secondes durant 12 heures n'ont pas détérioré l'assemblage. Enfin, en fonctionnement, les archets mis à l'essai résistaient à des températures de l'ordre de 300 °C dans le cas des résines phénoliques, ce qui est nettement suffisant pour la plupart des applications.

### Avantages

L'étrier selon l'invention présente également l'avantage d'être léger, d'être résistant à la corrosion et de limiter les phénomènes d'arcs électriques entre la caténaire et l'étrier.

Les délais de réalisation d'un profil particulier d'un étrier selon l'invention sont nettement plus courts que ceux normalement requis pour la réalisation d'un étrier en métal (typiquement en acier ou en aluminium) de l'art antérieur qui est généralement obtenu par filage.

L'invention facilite le changement de forme de l'étrier et de l'archet de pantographe et se prête bien à des formes variées.

L'étrier et l'archet selon l'invention se prêtent aisément à la fabrication de petites séries.

En cas de rupture de la bande de frottement, l'étrier selon l'invention permet de maintenir l'unité de l'archet, c'est-à-dire de l'ensemble bande/étrier.

L'archet selon l'invention présente également une grande étanchéité. En particulier, il permet d'éliminer les risques d'infiltration d'eau entre la bande et l'étrier, qui peuvent se produire dans les archets de l'art antérieur comprenant un étrier en métal et assemblés par soudage, brasage ou collage, et qui, notamment, peuvent conduire à la dégradation de l'archet en cas de gel.

## Revendications

1. Etrier d'archet de pantographe (3), **caractérisé en ce qu'**il comprend, en tout ou partie, au moins un composite organique comprenant des fibres et une matrice organique.

2. Etrier selon la revendication 1, **caractérisé en ce que** ladite matrice est une résine polymère.

3. Etrier selon la revendication 2, **caractérisé en ce que** ladite résine polymère est une résine polymère thermodurcissable.

4. Etrier selon la revendication 3, **caractérisé en ce que** ladite résine polymère thermodurcissable est une résine phénolique.

5. Etrier selon l'une quelconque des revendications 1 à 4, **caractérisé en ce que** lesdites fibres comprennent des fibres organiques.

6. Etrier selon l'une quelconque des revendications 1 à 4, **caractérisé en ce que** lesdites fibres comprennent des fibres minérales.

7. Etrier selon la revendication 6, **caractérisé en ce que** lesdites fibres minérales comprennent des fibres de verre.

8. Etrier selon l'une quelconque des revendications 1 à 7, **caractérisé en ce qu'**il comprend en outre des moyens de fixation mécanique (4, 11).

9. Etrier selon l'une quelconque des revendications 1 à 8, **caractérisé en ce qu'**il comprend en outre des moyens de raccordement électrique (51, 52).

10. Archet de pantographe (1) comprenant une bande de frottement (2) et un étrier (3) selon l'une quelconque des revendications 1 à 9.

11. Archet selon la revendication 10, **caractérisé en ce que** la bande de frottement (2) est en graphite ou en composite carbone/carbone.

12. Archet selon la revendication 10, **caractérisé en ce que** la bande de frottement (2) est en graphite imprégné d'un métal ou en composite carbone/carbone imprégné d'un métal.

13. Archet selon la revendication 12, **caractérisé en ce que** ledit métal est du cuivre ou un alliage contenant du cuivre, tel qu'un laiton ou un bronze, ou du plomb ou un alliage contenant du plomb.

14. Archet selon l'une quelconque des revendications 10 à 13, **caractérisé en ce qu'**il comprend en outre moyens (6, 61, 62) pour détecter les avaries et/ou l'usure de la bande de frottement.

15. Pantographe comprenant au moins archet (1) selon l'une quelconque des revendications 10 à 14.

16. Procédé de fabrication de l'archet selon l'une quelconque des revendications 10 à 14, **caractérisé en ce qu'**il comprend :
- l'introduction d'une bande de frottement (2) dans le moule (100) comprenant un corps (101, 102) et une contre-forme (103) ;
- l'application d'un mélange de fibres et de résine, ou "prepreg", (110) sur la bande de frottement (2) ;
- le pressage du prepreg à l'aide d'une contre-forme (103), de manière à lui donner une répartition homogène et à assurer un contact intime entre la bande et la résine ;
- une opération de durcissement du composite par polymérisation ;
- le démoulage de l'archet.

17. Procédé selon la revendication 16, **caractérisé en ce que** le moule est constitué de pièces séparées et complémentaires (101, 102).

## Patentansprüche

1. Bügel (3) für Stromabnehmer-Schleifstück, **dadurch gekennzeichnet, dass** er ganz oder zum Teil aus zumindest einem organischen Verbundwerkstoff mit Fasern und einer organischen Matrix besteht.

2. Bügel nach Anspruch 1, **dadurch gekennzeichnet, dass** die Matrix ein Polymerharz ist.

3. Bügel nach Anspruch 2, **dadurch gekennzeichnet, dass** das Polymerharz ein duroplastisches Polymerharz ist.

4. Bügel nach Anspruch 3, **dadurch gekennzeichnet, dass** das duroplastische Polymerharz ein Phenolharz ist.

5. Bügel nach irgendeinem der Ansprüche 1 bis 4, **dadurch gekennzeichnet, dass** die Fasern organische Fasern umfassen.

6. Bügel nach irgendeinem der Ansprüche 1 bis 4, **dadurch gekennzeichnet, dass** die Fasern Mineralfasem umfassen.

7. Bügel nach Anspruch 6, **dadurch gekennzeichnet, dass** die Mineralfasern Glasfasern umfassen.

8. Bügel nach irgendeinem der Ansprüche 1 bis 7, **dadurch gekennzeichnet, dass** er außerdem mechanische Befestigungsmittel (4, 11 ) aufweist.

9. Bügel nach irgendeinem der Ansprüche 1 bis 8, **dadurch gekennzeichnet, dass** er außerdem elektrische Anschlussmittel (51, 52) aufweist.

10. Stromabnehmer-Schleifstück (1) mit einer Schleifleiste (2) und einem Bügel (3) nach irgendeinem der Ansprüche 1 bis 9.

11. Schleifstück nach Anspruch 10, **dadurch gekennzeichnet, dass** die Schleifleiste (2) aus Graphit oder aus Kohlenstoff/Kohlenstoff-Verbundwerkstoff ist.

12. Schleifstück nach Anspruch 10, **dadurch gekennzeichnet, dass** die Schleifleiste (2) aus metallimprägniertem Graphit oder aus metallimprägniertem Kohlenstoff/Kohlenstoff-Verbundwerkstoff ist.

13. Schleifstück nach Anspruch 12, **dadurch gekennzeichnet, dass** das Metall Kupfer oder eine kupferhaltige Legierung wie Messing oder Bronze oder Blei oder eine bleihaltige Legierung ist.

14. Schleifstück nach irgendeinem der Ansprüche 10 bis 13, **dadurch gekennzeichnet, dass** es außerdem Mittel (6, 61, 62) aufweist, um Schäden und/oder die Abnutzung der Schleifleiste zu detektieren.

15. Stromabnehmer mit mindestens einem Schleifstück (1) nach irgendeinem der Ansprüche 10 bis 14.

16. Verfahren zur Herstellung des Schleifstücks nach irgendeinem der Ansprüche 10 bis 14, **dadurch gekennzeichnet, dass** es umfasst:
- das Einlegen einer Schleifleiste (2) in die Form (100) bestehend aus einem Formkörper (101, 102) und einer Gegenform (103),
- das Aufbringen eines Faser/Harz-Gemisches oder "Prepregs" (110) auf die Schleifleiste (2),
- das Verpressen des Prepregs mittels einer Gegenform (103), um ihn homogen zu verteilen und einen engen Kontakt zwischen Leiste und Harz zu gewährleisten,
- eine Härtung des Verbundwerkstoffs durch Polymerisation,
- das Entformen des Schleifstücks.

17. Verfahren nach Anspruch 16, **dadurch gekennzeichnet, dass** die Form aus separaten, sich ergänzenden Teilen (101, 102) besteht.

## Claims

1. Pantograph sliding-strip sheath (3), **characterised in that** it is partly or wholly composed of at least one organic composite containing fibres and an organic matrix.

2. Sheath according to claim 1, **characterised in that** the said matrix is a polymer resin.

3. Sheath according to claim 2, **characterised in that** the said polymer resin is a thermosetting polymer resin.

4. Sheath according to claim 3, **characterised in that** the said thermosetting polymer resin is a phenolic resin.

5. Sheath according to any one of claims 1 to 4, **characterised in that** the said fibres comprise organic fibres.

6. Sheath according to any one of claims 1 to 4, **characterised in that** the said fibres comprise mineral fibres.

7. Sheath according to claim 6, **characterised in that** the said mineral fibres comprise glass fibres.

8. Sheath according to any one of claims 1 to 7, **characterised in that** it further comprises mechanical attachment means (4, 11).

9. Sheath according to any one of claims 1 to 8, **characterised in that** it further comprises electrical attachment means (51, 52).

10. Pantograph sliding strip (1) comprising a wearing strip (2) and a sheath (3) according to any one of claims 1 to 9.

11. Sliding strip according to claim 10, **characterised in that** the wearing strip (2) is made of graphite or a carbon / carbon composite.

12. Sliding strip according to claim 10, **characterised in that** the wearing strip (2) is made of graphite impregnated with a metal or a carbon / carbon composite impregnated with a metal.

13. Sliding strip according to claim 12, **characterised in that** the said metal is a copper or an alloy containing copper such as brass or bronze, lead or an alloy containing lead.

14. Sliding strip according to any one of claims 10 to 13, **characterised in that** it further comprises means (6, 61, 62) for detecting failures and / or wear of the wearing strip.

15. Pantograph comprising at least a sliding strip (1) according to any one of claims 10 to 14.

16. Process for manufacturing the sliding strip according to any one of claims 10 to 14, **characterised in that** it comprises:
- insertion of a wearing strip (2) in the mould (100) comprising a body (101, 102) and a counter form (103);
- application of a mixture of fibres and resin, or "prepreg", (110) on the wearing strip (2);
- pressing of the prepreg using a counter form (103) so as to achieve a uniform distribution and to make an intimate contact between the strip and the resin;
- a thermosetting operation of the composite by polymerisation;
- removal of the slipper-holder from the mould.

17. Process according to claim 16, **characterised in that** the mould is composed of separate and complementary parts (101, 102).
